# EUROPEAN PATENT SPECIFICATION

(11) **EP 2 768 916 B1**
(45) Date of publication and mention of the grant of the patent: **13.02.2019**
(21) Application number: 12783157.6
(22) Date of filing: 18.10.2012
(51) Int. Cl.: C09J 129/04, C09J 7/00, C09J 131/04, C08K 5/07, C08K 5/21

(54) **WOOD AHDESIVE COMPOSITIONS**
HOLZKLEBEZUSAMMENSETZUNGEN
COMPOSITIONS D'ADHÉSIFS À BOIS

(30) Priority: 19.10.2011 IT MI20111898
(43) Date of publication of application: 27.08.2014
(73) Proprietor: Vinavil S.p.A., 20159 Milano (IT)
(72) Inventor: ZANETTA, Tito, I-20159 Milano (IT); CHIOZZA, Fabio, I-20159 Milano (IT); RE, Claudio, I-20159 Milano (IT)
(74) Representative: Minoja, Fabrizio
(86) International application number: PCT/EP2012/070694
(87) International publication number: WO 2013/057214

(56) References cited:
- WO-A1-2007/084307
- US-A- 3 925 289
- US-A1- 2010 179 272
- US-B1- 6 730 718

## Description

### Field of invention

Disclosed is the formulation of a non-structural thermoplastic wood adhesive with high water resistance (durability class D4/5 ≥ 4.4 N/mm² according to standard EN-204/205) based on a vinyl homopolymer or copolymer with a high molecular weight, including at least one modified polyvinyl alcohol with a high degree of hydrolysis (>95%), optionally a coalescing agent, a complexing salt and at least one masked polyaldehyde. The formulation according to the invention has a Minimum Film-Forming Temperature (MFFT) ≤ 8°C, heat resistance according to EN-14257 greater than 7 N/mm², creep resistance >21 days according to EN-14256, and shelf life greater than 3 months. In particular, the present invention discloses a thermoplastic adhesive for use in non-structural wood bonding characterised by a higher water-resistance class according to EN-204, high mechanical characteristics (resistance to temperature variations and static load), and excellent shelf life.

### Background to the invention

The use of polyvinyl alcohol (PVOH) as a protective colloid in the emulsion polymerisation of vinyl acetate has long been known, as are the advantages conferred on a polyvinyl acetate (PVac) based adhesive by the presence of PVOH, such as suitable rheology, good adhesion to cellulose substrates, setting speed, and high cohesion of the polymer film. However, for some applications the presence of PVOH can constitute a drawback, as a consequence of the hydrophilia it confers on the polymer film. For this reason the choice of type and quantity of PVOH is crucial in determining the performance characteristics of a dispersed PVac, especially when used to formulate a water-resistant adhesive.

The polyvinyl alcohol most commonly used in emulsion polymerisation has an intermediate degree of hydrolysis (between 85 and 92%), which guarantees the best balance between hydrophilic and hydrophobic properties. The polyvinyl alcohols with a higher degree of hydrolysis (>95%) are normally post-added, as they do not guarantee sufficient colloidal stability of the PVac dispersion. However, US 5,434,216 demonstrates that PVOH with a higher degree of hydrolysis mixed with polyvinyl alcohols with an intermediate degree of hydrolysis can be used in polymerisation to improve the water resistance of PVac dispersions. Moreover, some PVOHs with a high degree of hydrolysis, modified with ethylene, are available on the market which guarantee a better balance between the water resistance of the polymer film and the stability of the dispersion than standard polyvinyl alcohols, as demonstrated in US 6,451,898 and EP 0,692,494.

In the class of high-range non-structural water-resistant adhesives ("D4 adhesives"), the characteristics required in addition to water resistance (D4/5 ≥ 4 N/mm² according to EN-204/205) are high heat resistance (WATT91 ≥ 7 N/mm² according to EN-14257), static load resistance (Creep ≥ 21 days according to EN-14256), a low Minimum Film-Forming Temperature (MFFT ≤ 8°C) and good shelf life (namely constant viscosity and pH values, and maintenance of adhesive performance over time).

In the prior art these characteristics are usually obtained by inserting a self-crosslinking comonomer (N-methylolacrylamide) into the PVac and postformulating the dispersion with coalescent and AlCl₃ solution; the latter, as well as masking the hydrophilic groups of PVOH (with a medium degree of hydrolysis) by complexing, provides the acid pH for crosslinking of NMA. However, with this technique a further addition of crosslinker (aliphatic isocyanate or Cr(III) salt) is required to obtain water resistance according to durability class D4, in a formulation which at that point has limited stability over time (a few hours); it is therefore called a two-component D4 adhesive. Moreover, the use of NMA gives the adhesive significant amounts of formaldehyde, and further amounts can be generated in the crosslinking reaction (autocondensation of the methylol groups).

The quantity of PVOH is also usually important in determining the application characteristics of the PVac dispersion. While an increase in the quantity of PVOH favourably influences the heat resistance of the adhesive by acting on the cohesion of the polymer film, it generally has an adverse effect on water resistance, with the result that one of the two characteristics is usually obtained, but never both (US 3,644,257; Polym. Plast. Technol. Eng., 27_(1998), 61).

Only EP 2000485 shows that it is possible, by using PVOH with a high degree of hydrolysis and inserting (meth)acrylamide comonomers, to obtain a formaldehyde-free water-resistant adhesive (durability class D3/3 ≥ 1.5 N/mm²) with good heat resistance (≥ 6 N/mm²) by making an emulsion polymerization of a vinyl ester/(meth)acrylamide mixture in the presence of a PVOH with a high degree of hydrolysis. The formulation does not use acidic metal salts, and no reference is made to the D4 durability of the adhesive.

US 5,545,684 illustrates a formulation based on a polyvinyl ester in the presence of a protective colloid, a complexing salt and at least one masked polyaldehyde to produce an adhesive for porous substrates having high water resistance (durability class D4/5); however, the patent makes no reference to the heat or creep resistance of the adhesive, while the stability data reported imply a pot life of a few hours, or at most a few days, for application.

In US 6,730,718 the addition of masked glyoxal improves the stability characteristics of the adhesive prepared according to US 5,545,684: however, the patent makes no reference to the heat or creep resistance of the adhesive. Viscosity increases are also showed which, though much lower than in the prior art, are not suitable to consider the product as a one-component adhesive.

### Description of the invention

It has surprisingly been discovered that an aqueous dispersion comprising:
a) a polyvinyl ester obtained by a process of radical emulsion polymerisation, optionally in the presence of b), c), e), f) and/or g)
b) at least one polyvinyl alcohol with a degree of hydrolysis of between 85% and 92%, in quantities of between 0.5-12% by weight of the polymer
c) at least one polyvinyl alcohol with a degree of hydrolysis > 95%, in quantities of between 1-15% by weight of the polymer
d) at least one Lewis acid metal salt
e) optionally, a coalescing agent in such a quantity as to give the formulated dispersion an MFFT ≤ 8°C
f) urea in quantities of between 0.02% and 20% by weight of the polymer
   and
g) at least one masked polyaldehyde in quantities of between 0.1% and 5% by weight of the dispersion
   produces a one-component D4 wood adhesive with the following characteristics:
   - water resistance expressed as the D4/5 value (EN-204) ≥ 4.4 N/mm²
   - shelf life ≥ 3 months
   - heat resistance expressed as the value of the adhesive strenght of the joint (EN-14257) ≥ 7 N/mm²
   - creep resistance (EN-14256) ≥ 21 days.

Monomers suitable for the formation of polyvinyl ester are preferably vinyl esters of alkanoic acids having from 2 to 16 C atoms, or mixtures thereof; these monomers are present in quantities of 70 to 100% by weight of the total monomers. This group includes, for example, vinyl acetate, vinyl propionate, vinyl butyrate, vinyl 2-ethylhexanoate, vinyl laurate and vinyl versatate.

Any other monomer or monomeric mixture able to be copolymerised with vinyl esters can be used, in the quantity of up to 30% by weight of the total monomers.

For example, another monomeric component can belong to the class of alkyl (meth)acrylates having 1 to 10 C atoms in the alkyl chain, can be constituted by one or more unsaturated dicarboxylic acid diesters and/or belong to the class of unsaturated aliphatic, aromatic and/or halogenated hydrocarbons; examples of these are butyl acrylate, 2-ethylhexyl acrylate, methyl methacrylate, dibutyl maleate, ethylene, propylene, styrene and vinyl chloride. Suitable are also monomers containing reactive functional groups (epoxy, carbonyl, hydroxy) such as diacetone acrylamide, glycidyl methacrylate and hydroxyethyl acrylate.

The dispersion according to the invention is prepared via emulsion polymerisation in jacket-cooled reactors equipped with variable-speed stirrer and condenser, in the presence of radical initiators such as persulphates or peroxides, and optionally in the presence of reducing agents such as ascorbic acid or sodium metabisulphite. The quantity of initiators is established on the basis of the reaction conditions and the desired molecular weight, and ranges between 0.001% and 1% by weight of the total monomers, preferably between 0.02% and 0.1%. Typically, part of the initiator is added to the initial reactor load, while the remainder is metered in, together with the monomers, over a time of 2 to 6 hours.

The polyvinyl ester is prepared in the presence of at least one polyvinyl alcohol with an intermediate degree of hydrolysis (between 85% and 92%) in quantities of between 0.5 and 12% by weight of the polymer, and at least one polyvinyl alcohol with a high degree of hydrolysis (> 95%) in quantities of between 1 and 15% by weight of the polymer. The polyvinyl alcohol with a high degree of hydrolysis can be the standard type, or preferably the ethylene modified type, where the ethylene is generally present in quantities ranging from 1% to 6% molar. The polyvinyl alcohols can be partly added in the initial reactor charge, partly fed in during the polymerisation reaction, and/or partly post-added to the dispersion at the end of the reaction. They are preferably added to the initial charge before the start of polymerisation.

In addition to said polyvinyl alcohols, anionic or non-ionic surfactants or other protective colloids can be used, in quantities of up to 3% by weight of the polymer. Anionic surfactants include, for example, sodium or ammonium salts of alkyl ether sulphates, alkyl aryl sulphonates, alkyl ether phosphates and alkane sulphonates. Non-ionic surfactants include ethoxylated fatty alcohols and alkyl phenol ethoxylates.

The dispersions according to the invention are produced with a solid content of between 30% and 70%, preferably between 48% and 60%. The reaction is conducted at temperatures of between 50°C and 95°C, preferably between 70°C and 85°C, with an initial charge containing up to 50% of the monomers, the remainder being metered in after the ignition in 2-8 hours. Further amounts of initiators (thermal or redox) are added at the final stages of the reaction to bring the conversion to values very close to 100%. During the reaction the pH is maintained at between 3 and 6 (preferably between 3 and 5) with the use of buffers such as sodium acetate, in quantities of up to 0.5% by weight of the total monomers.

The acidic salts containing a polyvalent cation complexable by polyvinyl alcohol are the type disclosed in DE A3942628, and are added at the end of the polymerisation reaction in quantities ranging between 0.05% and 10% of the polymer. AlCl₃ or Al(NO₃)₃ are preferably used.

Depending on the Tg of the polyvinyl ester, it may be necessary to add coalescing agents or plasticizers to obtain a Minimum Film-Forming Temperature of the dispersion ≤ 8°C, a characteristic commonly required in technical practice. The most widely used include, for example, (poly)ethylene glycols, propylene glycols, butyl carbitol acetate, carbonates, and mixtures of mono- and bi-carboxylic acid esters. The addition of film-forming adjuvants is variable up to a maximum of 10% by weight of the polymer, and the choice of type and quantity of coalescent or plasticizer is crucial in determining the performances of the adhesive, especially the performances most closely connected with the mechanical properties of the polymer (heat and creep resistance). It is known in technical practice that as the coalescent and plasticizer content increases, the polymer softens, leading to a deterioration in its mechanical properties.

It has now surprisingly been discovered that the addition of urea not only does not worsen the performances of the adhesive (as already stated in EP 2000485 for products containing PVOH with a high degree of hydrolysis), but considerably improves the stability of the viscosity of the dispersion prepared according to the invention. Urea can be added in quantities of between 0.02% and 20%, preferably between 0.1% and 8% by weight of the polymer.

It is known from numerous studies that the crosslinking effect of polyaldehydes (whether free or in adduct form) on polyvinyl alcohol considerably reduces its hydrophylia (US 7,807,749; US 20060252855; EP A 0 191 460; US 5,545,684; US 6,730,718), conferring on a polyvinyl acetate dispersion, stabilized with polyvinyl alcohol and added of polyaldehydes, high resistance to boiling water (D4/5) according to standard UNI EN-204 (US 5,545,684; US 6,730,718). However, in all these cases, the stability of the dispersion thus formulated is such that the adhesive cannot be described as a one-component adhesive from the standpoint of technical practice.

In the specific case to which the present invention relates, however, it was surprisingly discovered that even in the presence of a single polyaldehyde, the use of a molar excess of a masking agent and urea considerably increases the stability of the dispersion to over 3 months, with no worsening in the performances of the adhesive. The polyaldehydes preferably used are linear dialdehydes of the oxalic-adipic series, while the preferred masking agent is sodium metabisulphite.

The dispersion thus formulated possesses all the characteristics of a high-range one-component "D4 adhesive":
- water resistance expressed as the D4/5 value (EN-204) ≥ 4.4 N/mm²
- shelf life ≥ 3 months
- heat resistance expressed as the value of the adhesive strenght of the joint (EN-14257) ≥ 7 N/mm²
- creep resistance (EN-14256) ≥ 21 days.

The wood adhesive formulation according to the invention can also include other conventionally used components, such as biocides, antifoaming agents, thickeners and inorganic fillers, which are generally useful to guarantee storability and/or machine application.

### Evaluation methods

### 1) Determination of tensile shear strength of lap joints.

Wood adhesive for non-structural use with frequent exposure to running or condensed water (durability class D4).

The evaluation is carried out according to standards EN 204 and EN 205.

| | |
|---|---|
| Type of support: | Beech (Fagus sylvatica), not evaporated |
| Wood density, kg/m³: | 700 ± 50 |
| Wood moisture content, %: | 12 ± 1 |
| Quantity of adhesive g/m² / spreading: | 150 ± 10 / both sides |
| Open time in minutes: | max. 1 |
| Closed time in minutes: | approx. 4 |
| Pressing time at (23 ± 2)°C: | 2 hours |
| Applied pressure, N/mm²: | 0.8 ± 0.1 |

### 2) Determination of tensile shear strength of lap joints at high temperature (WATT91)

The evaluation is carried out according to standard EN 14257

| | |
|---|---|
| Type of support: | Beech (Fagus sylvatica), not evaporated |
| Wood density, kg/m³: | 700 ± 50 |
| Wood moisture content, %: | 12 ± 1 |
| Quantity of adhesive g/m² / spreading: | 150 ± 10 / both sides |
| Open time in minutes: | max. 1 |
| Closed time in minutes: | approx. 4 |
| Pressing time at (23 ± 2)°C: | 2 hours |
| Applied pressure, N/mm²: | 0.8 ± 0.1 |

### 3) Wood Adhesives for non-structural use: test methodology and requirements for determination of resistance to long-term static load

The evaluation is carried out according to standard EN 14256

| | |
|---|---|
| Type of support: | Beech (Fagus sylvatica), not evaporated |
| Wood density, kg/m³: | 700 ± 50 |
| Wood moisture content, %: | 12 ± 1 |
| Quantity of adhesive g/m² / spreading: | 150 ± 10 / one side |
| Open time in minutes: | max. 1 |
| Closed time in minutes: | approx. 4 |
| Pressing time at (23 ± 2)°C: | 2 hours |
| Applied pressure, N/mm²: | 0.8 ± 0.1 |

### 4) Shelf life

The shelf life test involves monitoring the dispersion under different heat conditions to establish whether the adhesive undergoes significant alterations.

The chemico-physical characteristics (viscosity and pH) and application characteristics (D4, WATT91, etc.) are monitored.

The test is performed at two different temperatures:
- 23°C, storage under ideal conditions
- 50°C, storage under critical conditions.

### a) Storage at 23°C.

A portion of adhesive is placed in a hermetically sealed glass vessel, the initial Brookfield viscosity and pH are measured, and the vessel is stored, sealed, in an air-conditioned environment at 23°C and 50% RH (relative humidity).

At regular intervals, usually 15 and 30 days, the Brookfield viscosity and pH are measured, and any alterations in the adhesive (colour variations, thickening or coagulation, phase separations with formation of an aqueous layer, odour or sediment) are recorded.

Monitoring can continue for up to 6 months, monthly measurements of the Brookfield viscosity and pH being taken.

The result of the test, for each period of time considered, is expressed as the percentage variation in viscosity, pH and any alterations observed.

### b) Storage at 50°C.

A portion of adhesive is placed in a hermetically sealed glass vessel, the Brookfield viscosity and initial pH are measured, and the vessel is stored, sealed, in a thermostatic laboratory stove able to maintain a temperature of 50±1°C over time. At regular intervals, usually 15 and 30 days, the Brookfield viscosity and pH are measured (after a minimum reconditioning period of 4 hours at 23°C and 50% RH), and any alterations in the adhesive (colour variations, thickening or coagulation, phase separations with formation of an aqueous layer, odour or sediment) are recorded.

The result of the test, for each period of time considered, is expressed as the percentage variation in viscosity, pH and any alterations observed.

### c) Monitoring of performances over time.

The specific tests (e.g. D4 water resistance etc.) are repeated at predetermined intervals (usually once a month) on samples stored in an air-conditioned environment with constant temperature and humidity (23°C and 50% RH).

The results obtained are compared with the original performance.

### 5) Determination of minimum film-forming temperature (MFFT)

The test is carried out according to UNI 8490 part 14.

On a perfectly horizontal flat metal plate, a suitable temperature gradient is formed between a hot and a cold source. When the working temperature is reached, one or more layers of film are spread on the plate (starting from the hottest end); a dry airstream aids drying.

The MFFT is the limit temperature at which the polymer film is not transparent and continuous.

### Examples

The following examples further illustrate the invention, without limiting it.

### Preparation of base dispersion

150 g of water, 840 g of 10% solution of Exceval RS2117 (polyvinyl alcohol with a high degree of hydrolysis [99%] modified with ethylene), 125 g of 12% solution of Mowiol 4788 (polyvinyl alcohol with an intermediate degree of hydrolysis [88%]), 1.6 g of Rhodacal DS4 (25% solution of anionic surfactant, alkyl aryl sulphonate), 0.5 g of Agitan 271 (antifoaming agent) and, under stirring, 100 g of vinyl acetate, are loaded into a 3-litre reactor equipped with anchor stirrer or gate, condenser, thermocouple and outer jacket connected to a thermostatic bath. The reactor charge is heated to 65°C, and the reaction is initiated with 0.14 g of ammonium persulphate dissolved in 3 g of water and 5 g of 3% hydrogen peroxide. After a temperature increase of 4°C the remainder of the vinyl acetate (900 g) is fed into the reactor over 4.5 hours, and 1 hour after the start of the feed, 33 g of an 0.3% hydrogen peroxide solution is fed in 4.5 hours. At the end of the hydrogen peroxide feed, 7.6 g of a 5% solution of ammonium persulphate is added in 30 minutes, and after being left to stand for 60 minutes at maximum temperature, stripping is conducted under vacuum to reduce the residual monomer and/or cool the product.

The dispersion thus obtained has a 50.0% solid content, RVT Brookfield viscosity 9500 mPa*s (20 rpm, 23°C, spindle 5), 0.014% coagula at 75 microns, and pH = 3.9.

### Example 1 High-range one-component D4 adhesive

19.8 g of propylene carbonate emulsified in 20.7 g of 10% Exceval RS2117 solution, 24.2 g of 28% aqueous solution of AlCl₃, 5.0 g of urea and 11.2 g of a mixture consisting of 5.9 g of 24% glutaraldehyde solution and 5.3 g of sodium metabisulphite are added to 920 g of the base dispersion. The finished adhesive has a 50.1% solid content, pH=3.1 and RVT Brookfield viscosity 9800 mPa*s (20 rpm, 23°C, spindle 5). The results of the application tests are set out in Table 1.

### Comparative example 2 from US 5,545,684

550 g of water, 428 g of 14% solution of Mowiol 18-88, 1.2 g of 5% solution of sodium formaldehyde sulphoxylate (SFS) and 1 g of Agitan 271 are loaded into a 3-litre reactor equipped with anchor stirrer or gate, condenser, thermocouple and outer jacket connected to a thermostatic bath: 50 g of vinyl acetate are added under stirring. The reactor charge is heated to 50°C, and the reaction is then initiated with 1.7 g of 12.3% tert-butyl hydroperoxide. When the exothermy of the ignition phase is exhausted, the remainder of the vinyl acetate (950 g) is fed into the reactor in 3 hours simultaneously with 51 g of a 1.2% solution of tert-butyl hydroperoxide and 51 g of an 0.6% solution of SFS. 20 minutes after the end of the feeds, 2 g of a 5% solution of tert-butyl hydroperoxide and 4 g of a 1% solution of SFS are added; after being left to stand for 30 minutes at maximum temperature, the product is cooled. 40 g of butyl carbitol acetate are slowly added.

The dispersion thus obtained has a 52.0% solid content, RVT Brookfield viscosity 45000 mPa*s (20 rpm, 23°C, spindle 6), 0.029% coagula at 75 microns, and pH = 3.9.

57 g of 28% AlCl₃ is added to the dispersion, and after 24 hours, 53 g of 20% glutaraldehyde bisulphite adduct (GABNA) is added. The adhesive, suitably diluted, has a 49.7% solid content, pH=2.8 and RVT Brookfield viscosity 16000 mPa*s (20 rpm, 23°C, spindle 5). The results of the application tests are set out in Table 1.

**Table 1**

| Example | | D3(N/mm²) acc. to EN 204/EN 205 | D4(N/mm²) acc. to EN 204/EN 205 | MFFT (°C) | WATT91 (N/mm²) acc. to EN 14257 | Creep resistance (days) acc. to EN 14256 | Δ viscosity%/pH after 72 hrs (23°C, 50%RH) | Δ viscosity%/pH after 1 month (50°C) |
|---|---|---|---|---|---|---|---|---|
| Base dispersion | | 1.7 | - | 1.4 | 7.3 | - | - | - |
| **1** | **inventive D4** | - | **4.7** | **6** | **7.4** | **>21** | **2/3.1** | **25/3.0** |
| 2 | comparative D4 | - | 5.3 | 8.5 | 5.1 | 4 | collapse | collapse |

## Claims

1. A "formaldehyde-free" water-resistant high-performance adhesive composition for wood in the form of an aqueous dispersion comprising:
a) a polyvinyl ester;
b) at least one polyvinyl alcohol with hydrolysis degree ranging from 85% to 92% in amounts ranging from 0.5% to 12% by weight based on the polymer;
c) at least one polyvinyl alcohol with hydrolysis degree > 95% in amounts ranging from 1% to 15% by weight based on the polymer;
d) at least one Lewis acid metal salt;
e) optionally a coalescing agent in such amounts as to give the formulated dispersion an MFFT (Minimum Film-Forming Temperature) ≤ 8°C;
f) urea in an amount ranging from 0.02% to 20% by weight based on the polymer, and
g) a masked polyaldehyde.

2. A composition according to claim 1 wherein the polyvinyl ester is obtained by a radical emulsion polymerisation process, optionally in the presence of b), c), e), f) and g).

3. A composition according to claim 2 wherein the polyvinyl ester is prepared by polymerisation of vinyl esters of alkanoic acids having from 2 to 16 C atoms, preferably vinyl acetate.

4. A composition according to claims 2 and 3 wherein the vinyl esters are present in a minimum amount of 70% of the total monomers.

5. A composition according to one or more of claims 1 to 4 wherein the polyvinyl alcohol with hydrolysis degree >95% is modified with ethylene.

6. A composition according to claim 1 wherein the masked polyaldehyde is present in amounts ranging from 0.1% to 5% by weight based on the dispersion.

7. A composition according to claim 6 wherein the polyaldehyde is a linear dialdehyde of the oxalic-adipic series and the masking agent is sodium metabisulphite.

8. A composition according to claim 7 wherein the sodium metabisulphite is present in twice the amount of the dialdehyde molar equivalent.

9. A D4 composition according to one or more of claims 6 to 8 also having water resistance expressed as the D4/5 value of the joint (EN-204) ≥ 4.4 N/mm², shelf life ≥ 3 months, MFFT ≤ 8°C, heat resistance expressed as the tensile strength value of the joint (EN-14257) ≥ 7 N/mm² and creep resistance (EN-14256) ≥ 21 days.

## Patentansprüche

1. Eine "Formaldehyd-freie" wasserbeständige leistungsstarke Klebezusammensetzung für Holz in Form einer wässrigen Dispersion, umfassend:
a) einen Polyvinylester;
b) mindestens einen Polyvinylalkohol mit einem Hydrolysegrad im Bereich von 85% bis 92% in Mengen im Bereich von 0,5 Gew-% bis 12 Gew-%, bezogen auf das Polymer;
c) mindestens einen Polyvinylalkohol mit einem Hydrolysegrad von > 95% in Mengen im Bereich von 1 Gew-% bis 15 Gew-%, bezogen auf das Polymer;
d) mindestens ein Lewis-Säure Metallsalz;
e) gegebenenfalls ein Koaleszenzmittel in solchen Mengen, um der formulierten Dispersion eine MFFT (Mindest-Filmbildungs-Temperatur) von ≤ 8°C zu verleihen;
f) Harnstoff in einer Menge im Bereich von 0,02 Gew.-% bis 20 Gew.-%, bezogen auf das Polymer, und
g) einen maskierten Polyaldehyd.

2. Eine Zusammensetzung gemäß Anspruch 1, wobei der Polyvinylester durch ein radikalisches Emulsionspolymerisationsverfahren erhalten wird, gegebenenfalls in Gegenwart von b), c), e), f) und g).

3. Eine Zusammensetzung gemäß Anspruch 2, wobei der Polyvinylester durch Polymerisation von Vinylestern von Alkansäuren mit 2 bis 16 C Atomen, bevorzugt Vinylacetat, hergestellt wird.

4. Eine Zusammensetzung gemäß den Ansprüchen 2 und 3, wobei die Vinylester in einer Mindestmenge von 70% der gesamten Monomere vorhanden sind.

5. Eine Zusammensetzung gemäß einem oder mehreren der Ansprüche 1 bis 4, wobei der Polyvinylalkohol mit einem Hydrolysegrad von > 95% mit Ethylen modifiziert ist.

6. Eine Zusammensetzung gemäß Anspruch 1, wobei der maskierte Polyaldehyd in Mengen von 0,1 Gew.-% bis 5 Gew.-%, bezogen auf die Dispersion, vorhanden ist.

7. Eine Zusammensetzung gemäß Anspruch 6, wobei der Polyaldehyd ein linearer Dialdehyd der Oxal-Adipin-Serie ist und das Maskierungsmittel Natriummetabisulfit ist.

8. Eine Zusammensetzung gemäß Anspruch 7, wobei das Natriummetabisulfat in doppelter Menge des molaren Dialdehydequivalents vorhanden ist.

9. Eine D4-Zusammensetzung gemäß einem oder mehreren der Ansprüche 6 bis 8, welches ebenso eine Wasserbeständigkeit, ausgedrückt als der D4/5-Wert der Verbindungsstelle (EN-204) ≥ 4,4 N/mm², Lagerungsbeständigkeit ≥ 3 Monate, MFFT ≤ 8°C, Wärmebeständigkeit, ausgedrückt als der Zugfestigkeitswert der Verbindungsstelle (EN-14257) ≥ 7 N/mm² und Kriechbeständigkeit (EN-14256) ≥ 21 Tage aufweist.

## Revendications

1. Composition adhésive à haute performance résistante à l'eau et « sans formaldéhyde » pour bois sous la forme d'une dispersion aqueuse comprenant :
a) un ester polyvinylique ;
b) au moins un alcool polyvinylique ayant un degré d'hydrolyse allant de 85 % à 92 % en des quantités allant de 0,5 % à 12 % en poids par rapport au polymère ;
c) au moins un alcool polyvinylique ayant un degré d'hydrolyse > 95 % en des quantités allant de 1 % à 15 % en poids par rapport au polymère ;
d) au moins un sel métallique d'acide de Lewis ;
e) éventuellement un agent de coalescence en des quantités suffisantes pour conférer à la dispersion formulée une MFFT (température minimale de formation de film) ≤ 8 °C ;
f) de l'urée en une quantité allant de 0,02 % à 20 % en poids par rapport au polymère, et
g) un polyaldéhyde masqué.

2. Composition selon la revendication 1, dans laquelle l'ester polyvinylique est obtenu par un procédé de polymérisation en émulsion radicalaire, éventuellement en présence de b), de c), de e), de f) et de g).

3. Composition selon la revendication 2, dans laquelle l'ester polyvinylique est préparé par polymérisation d'esters vinyliques d'acides alcanoïques ayant de 2 à 16 atomes de carbone, de préférence l'acétate de vinyle.

4. Composition selon les revendications 2 et 3, dans laquelle les esters vinyliques sont présents en une quantité minimale de 70 % du total des monomères.

5. Composition selon une ou plusieurs des revendications 1 à 4, dans laquelle l'alcool polyvinylique ayant un degré d'hydrolyse > 95 % est modifié avec de l'éthylène.

6. Composition selon la revendication 1, dans laquelle le polyaldéhyde masqué est présent en des quantités allant de 0,1 % à 5 % en poids par rapport à la dispersion.

7. Composition selon la revendication 6, dans laquelle le polyaldéhyde est un dialdéhyde linéaire de la série oxalico-adipique et l'agent de masquage est le métabisulfite de sodium.

8. Composition selon la revendication 7, dans laquelle le métabisulfite de sodium est présent en une quantité double de l'équivalent molaire de dialdéhyde.

9. Composition D4 selon une ou plusieurs des revendications 6 à 8, présentant également une résistance à l'eau exprimée par la valeur D4/5 du joint (EN-204) ≥ 4,4 N/mm², une durée de vie ≥ 3 mois, une MFFT ≤ 8 °C, une résistance à la chaleur exprimée par la valeur de la résistance à la traction du joint (EN-14257) ≥ 7 N/mm² et une résistance au fluage (EN-14256) ≥ 21 jours.
